# EUROPÄISCHE PATENTSCHRIFT

(11) **EP 1 426 752 B1**
(45) Veröffentlichungstag und Bekanntmachung des Hinweises auf die Patenterteilung: **05.10.2005**
(21) Anmeldenummer: 03450246.8
(22) Anmeldetag: 05.11.2003
(51) Int. Cl.: G01M 15/00, F01N 7/00

(54) **Abgasmessanordnung für Brennkraftmaschinen**
Exhaust gas testing device for internal combustion engines
Dispositif de contrôle des gaz d'échappement pour moteur à combustion interne

(30) Priorität: 04.12.2002 AT 8212002 U
(43) Veröffentlichungstag der Anmeldung: 09.06.2004
(73) Patentinhaber: DiTest Fahrzeugdiagnose GmbH, 8020 Graz (AT)
(72) Erfinder: Lackner, Gerald, Dipl. Ing., 8010 Graz (AT); Schimpl, Thomas, Ing., 8430 Leibnitz (AT); Gutkauf, Bernd, Dr., 8053 Graz (AT); Loidl, Michael, 8042 Graz (AT)
(74) Vertreter: Pinter, Rudolf

(56) Entgegenhaltungen:
- DE-A- 3 704 862
- GB-A- 2 350 888
- US-A- 4 253 336
- PATENT ABSTRACTS OF JAPAN vol. 1998, no. 06, 30. April 1998 (1998-04-30) & JP 10 048109 A (MITSUBISHI HEAVY IND LTD), 20. Februar 1998 (1998-02-20)

## Beschreibung

Die Erfindung betrifft eine Abgasmessanordnung für Brennkraftmaschinen, mit einer im Bereich des Auspuffendes der Brennkraftmaschine anbringbaren Messsonde, die in ein abgedichtet am Auspuffende befestigbares, im wesentlichen rohrförmiges Verlängerungsstück im Bereich von dessen dem Auspuff zugewandten Ende von der Seite her eingesetzt ist.

Messanordnungen mit einer im Bereich des Auspuffendes einer zu prüfenden Brennkraftmaschine anzubringenden Abgas-Messsonde werden in den letzten Jahren in ständig steigendem Ausmaß sowohl im Bereich von Forschung und Entwicklung als auch bei den periodisch durchzuführenden Überprüfungen von Brennkraftmaschinen und damit ausgerüsteten Fahrzeugen angewandt, um überhöhte Schadstoffemissionen bzw. diese verursachende Betriebsstörungen feststellen zu können. Während es im Bereich von größeren Stationärund Fahrzeugmotoren (und speziell bei PKWs und LKWs) bereits seit langem - bedingt durch entsprechende Auflagen des Gesetzgebers - genormte Prozeduren und Vorrichtungen zur Durchführung derartiger Abgasmessungen gibt, war es im Bereich von Kleinmotoren (wie etwa den Antriebsaggregaten von Motorrädem, Mofas, Rasenmähern, Kettensägen und ähnlichen Geräten) lange nicht möglich, auf einfache und für Überprüfungszwecke praktikable Weise derartige Messungen durchzuführen. Dies hauptsächlich deshalb, da die üblicherweise leicht zugänglichen (und deshalb bei den angesprochenen Großmotoren auch meist für die Probennahme herangezogenen) Auspuffenden derartiger Kleinmotoren nur relativ geringe Öffnungsquerschnitte aufweisen und in den meisten Fällen auch kein ausreichend weites Einstecken der Meßsonden ermöglichen. Zur Folge der geringen Öffnungsquerschnitte der Auspuffenden würde eine eingesteckte Messsonde den freien verbleibenden Querschnitt unter ungünstiger Staudruckerhöhung unbotmäßig verengen. Wenn die Messsonde andererseits auch nicht weit genug in das Auspuffende eingeschoben werden kann (für die zuerst angesprochenen größeren Motoren werden meist 30 bis 40 cm Einschubtiefe vorgeschrieben) kann auch nicht sichergestellt werden, dass durch die Messsonde keine das Messergebnis naturgemäß stark verfälschende Außenluft mit angesaugt wird. Dieser letzte Umstand ist speziell beispielsweise bei heutigen Motorradmotoren mit großvolumigen Zylindern (besonders bei Einzylinder-Viertaktmotoren) bedeutsam, da es dabei zu stark pulsierenden Abgasströmen mit teilweise extrem hohen Ausströmgeschwindigkeiten und damit einhergehenden periodischen Unterdruckzuständen am Auspuffende kommen kann.

Nachdem ein gesteigertes Umweltbewusstsein und auch entsprechende Auflagen des Gesetzgebers nun aber dazu führen, dass derartige Abgasmessungen auch an den angesprochenen, weit verbreiteten Kleinmotoren durchgeführt werden sollen, wurden auch bereits Abgasmessanordnungen vorgestellt, bei denen ein im wesentlichen rohrförmiges Verlängerungsstück am Auspuffende befestigt wird, in welches die Messsonde vom offenen Ende her eingeschoben ist. Aus der US 4 253 336 ist weiters eine Abgasmessanordnung der eingangs genannten Art bekannt, bei der ein rohrförmiges, abgeknicktes Verlängerungsstück über Schlauchstücke einerseits mit dem Auspuffende und andererseits mit der Außenumgebung verbunden ist, wobei die Messsonde seitlich in das Verlängerungsstück eingesetzt ist. Der Abgasstrom wird damit nach dem eigentlichen Auspuffende noch über eine bestimmte Strecke von der umgebenden Außenluft getrennt geführt ist, was das Einsaugen von Umgebungsluft in die Messsonde bei am Ort derselben unter Umständen auftretendem Unterdruck zumindest behindert. Nachteilig bleibt in beiden Fällen, dass diese Behinderung in der Praxis des Messbetriebs nur durch spezielle Abstimmung auf die konkret zu prüfende Brennkraftmaschine bzw. den jeweiligen Betriebszustand derselben in ausreichendem Maße sichergestellt werden kann bzw. dass bei abweichenden Bedingungen trotzdem weiterhin unkontrollierbar Verfälschungen der Messergebnisse durch miteingesaugte Umgebungsluft auftreten können.

Aufgabe der vorliegenden Erfindung ist es, eine Messanordnung der eingangs genannten Art so zu verbessern, dass die erwähnten Nachteile der bekannten Anordnung vermieden werden und dass insbesonders auf einfache Art und Weise eine sichere und aussagekräftige Abgasmessung unter in relativ weiten Bereichen unkritischen Bedingungen der angesprochenen Art auch bei kleineren Motoren mit kleineren und kürzeren zugänglichen Auspuffenden durchgeführt werden kann.

Diese Aufgabe wird gemäß der vorliegenden Erfindung bei einer Anordnung der eingangs genannten Art dadurch gelöst, dass das Verlängerungsstück zumindest bereichsweise in Umfangs- und/oder Längsrichtung soweit elastisch ausgebildet ist, dass Druckpulsationen im ausströmenden Auspuffgas zumindest teilweise in Volumenänderungen kompensiert und damit bedämpft werden, und dass im Bereich des dem Auspuff abgewandten Endes des Verlängerungsstückes zumindest eine den freien Durchströmquerschnitt definiert verengende Blende angeordnet ist, sodass im Inneren des Verlängerungsstückes Druckbedingungen vorliegen, die im wesentlichen dem Umgebungsdruck entsprechen. Durch das Verlängerungsstück wird der Abgasstrom wie erwähnt nach dem eigentlichen Auspuffende noch über eine bestimmte Strecke von der umgebenden Außenluft getrennt geführt, was das angesprochene Einsaugen von Umgebungsluft in die Messsonde bereits behindert. Durch die erwähnte elastische Ausbildung des Verlängerungsstückes, die Druckpulsationen im ausströmenden Auspuffgas zumindest teilweise in Volumenänderungen kompensieren und damit bedämpfen kann, ist zusammen mit der bzw. den den freien Durchströmquerschnitt im Bereich des dem Auspuff abgewandten Endes des Verlängerungsstückes verengenden Blende(n) auf einfache Weise sichergestellt, dass im Inneren des Verlängerungsstückes Druckbedingungen vorliegen, die im wesentlichen dem Umgebungsdruck entsprechen, womit ein das Messergebnis verfälschendes Einsaugen von Außenluft in die im Bereich des dem Auspuff zugewandten Endes des Verlängerungsstückes angebrachte Messsonde zuverlässig vermieden werden kann. Insgesamt werden durch das erfindungsgemäß ausgebildete Verlängerungsstück also Verhältnisse für die Abgasmessung geschaffen, die von den konkreten konstruktiven Gegebenheiten im Bereich des Auspuffendes der jeweiligen Brennkraftmaschine selbst praktisch unabhängig sind, sodass ohne die eingangs angesprochenen Nachteile der Anordnungen gemäß dem Stande der Technik entsprechende Abgasmessungen an praktisch allen Brennkraftmaschinen unabhängig von deren Größe einfach und aussagekräftig durchgeführt werden können.

In bevorzugter Ausgestaltung der Erfindung ist vorgesehen, dass das Volumen des Verlängerungsstückes zumindest größenordnungsmäßig im Bereich der Kubatur des/der Zylinder der geprüften Brennkraftmaschine liegt, was sich in der Praxis als einfach handhabbar und die beschriebene Druckvergleichmäßigung im Inneren ausreichend sicherstellend herausgestellt hat.

Gemäß einer besonders bevorzugten weiteren Ausgestaltung der Erfindung besteht zumindest der Mantelbereich des Verlängerungsstückes aus elastischem Material, vorzugsweise temperaturbeständigem Kunststoff, wie beispielsweise Silikon, welches vorzugsweise eine Shore-A-Härte im Bereich von 35-85, bevorzugt zumindest annähernd 60, aufweist. Dies ermöglicht eine sehr einfache Bereitstellung der erforderlichen Volumenelastizität des Verlängerungsstückes mit kostengünstigen Mitteln. Davon abgesehen könnten aber natürlich auch balgenartige Bereiche oder ähnliche bekannte elastische Elemente für Teile des Verlängerungsstückes Verwendung finden.

Das Verlängerungsstück weist in bevorzugter Ausgestaltung der Erfindung einen Durchmesser im Bereich von 30-45 mm, vorzugsweise etwa 35 mm, und eine Länge im Bereich von 300-800 mm, vorzugsweise etwa 500 mm, bei einem Durchlassdurchmesser der endseitigen Blende(n) im Bereich von 12-18 mm, vorzugsweise etwa 16 mm auf. Diese Dimensionierungen decken die üblicherweise zu prüfenden Kubaturen von Brennkraftmaschinen-Zylindem zur Erzielung der oben beschriebenen Vorteile gut ab und erlauben trotzdem noch eine einfache Handhabung im Messbetrieb.

Das Verlängerungsstück kann in weiterer Ausgestaltung der Erfindung an der Auspuffseite entweder einen abdichtend in das Auspuffende steckbaren äußeren Anschlußkonus oder aber einen abdichtend über das Auspuffende steckbaren inneren Anschlußkonus aufweisen, was auf einfache und beispielsweise verchromte Motorrad-Auspuffenden auch schonende Weise die abgedichtete Anbringung am Auspuffende für verschiedenste Durchmesser desselben ermöglicht.

Der erwähnte äußere oder innere Anschlußkonus kann in weiterer Ausgestaltung der Erfindung entweder zumindest an der dem Auspuffende zugewandten Oberfläche aus elastischem, hitzebeständigem Material bestehen oder aber an dieser Oberfläche zusätzliche Dichtelemente, vorzugsweise ringförmige Bürsten oder Lamellen, aufweisen, was beides eine einfache Handhabung der Meßsonde bei ausreichender Dichtheit und Schonung der Auspuffenden ermöglicht.

Bei größerem Öffnungsquerschnitt des Auspuffendes wird bevorzugt das Verlängerungsstück mit äußerem Anschlußkonus versehen und in das Auspuffende eingesteckt sein, wobei dann in bevorzugter Ausgestaltung der Erfindung die Meßsonde aus dem Verlängerungsstück in das Auspuffende vorragt und das Verlängerungsstück selbst bedarfsweise auch etwas kürzer ausgeführt sein kann.

Bei kleinerem Öffnungsquerschnitt des Auspuffendes wird das Verlängerungsstück bevorzugt mittels eines inneren Anschlußkonus über das Auspuffende gesteckt, wobei dann die Meßsonde im Inneren des Verlängerungsstückes hinter dem Anschlußkonus endet, um den freien Auspuffquerschnitt nicht unbotmäßig weiter zu verengen.

In beiden Fällen kann die Messsonde von der Seite her in an sich beliebigem Winkel in das Verlängerungsstück eingesetzt sein - möglich sind im wesentlichen senkrecht zur Achse des Verlängerungsstückes hin ausgerichtete Sonden ebenso wie schräg eingesetzte oder aber auch senkrecht eingesetzte und dann in Richtung der Achse abgewinkelte Messsonden die entweder nur eine Einsaugöffnung für das Abgas oder aber auch spezielle Abgassensoren tragen können.

Die Erfindung wird im folgenden noch anhand der in der Zeichnung schematisch dargestellten Ausführungsbeispiele näher erläutert. Fig. 1 zeigt dabei einen teilweise schematischen Schnitt durch eine Abgasmeßanordnung nach der vorliegenden Erfindung, Fig. 2 eine andere erfindungsgemäße Anordnung für Brennkraftmaschinen mit zwei parallelen Auspuffenden (beispielsweise an einem Motorrad) und die Fig. 3 bis 8 zeigen unterschiedliche Ausführungsbeispiele für die abgedichtete Befestigung der Meßsonde am Auspuffende in einer erfindungsgemäßen Abgasmeßanordnung.

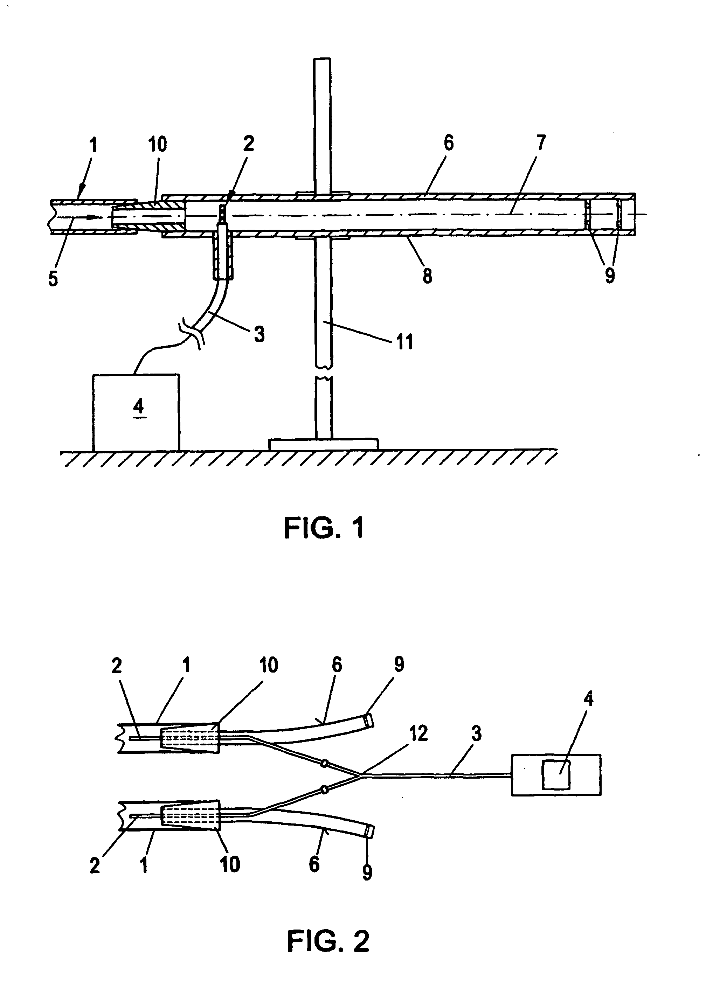

Die Abgasmessanordnung nach Fig. 1 weist eine im Bereich des Auspuffendes 1 einer nicht weiter dargestellten Brennkraftmaschine, die beispielsweise als Antriebsmotor in einem Motorrad oder dergleichen eingebaut sein kann, anbringbare Messsonde 2 auf, die über einen Anschlussschlauch 3 mit einem Abgasmessgerät 4 in Verbindung steht. Über die Messsonde 2 kann damit ein Teil des entlang des Pfeiles 5 von der zu prüfenden Brennkraftmaschine her zuströmenden Abgases abgesaugt und im Abgasmessgerät 4 auf interessierende Komponenten untersucht werden. Die Messsonde 2 ist in ein abgedichtet am Auspuffende 1 befestigtes, im wesentlichen rohrförmiges Verlängerungsstück 6 von der Seite her eingesetzt und ragt etwa bis in die Mitte des Verlängerungsstückes 6 vor. Davon abgesehen könnte die Messsonde 2 aber natürlich auch schräg in das Verlängerungsstück eingesetzt sein oder einen in Richtung der Achse 7 des Verlängerungsstückes abgewinkelten Sondenkopf besitzen. Auch könnten geeignete Abgassensoren unmittelbar am Kopf der Messsonde 2 angeordnet sein, womit dann an Stelle des Anschlussschlauches 3 nur noch entsprechende Signalleitungen zum Abgasmessgerät 4 notwendig wären.

Das Verlängerungsstück 6 ist zumindest bereichsweise in Umfangs- und/oder Längsrichtung elastisch ausgebildet, um mittels Volumenänderungen auf Druckpulsationen im Abgasstrom reagieren und derartige Pulsationen damit bedämpfen zu können. Im vorliegenden Ausführungsbeispiel ist zu diesem Zwecke zumindest der Mantelbereich 8 des Verlängerungsstückes 6 aus elastischem Material, vorzugsweise temperaturbeständigem Silikon oder dergleichen ausgeführt, welches eine Shore-A-Härte im Bereich von etwa 60 aufweist, was sich als hervorragend geeignet für den beschriebenen Zweck herausgestellt hat. Im Bereich des dem Auspuffende 1 abgewandten Endes des Verlängerungsstückes 6 sind hier in einem gewissen Abstand zwei den freien Durchströmquerschnitt verengende Blenden 9 angebracht, die beispielsweise einfach von der offenen Seite des Mantelbereiches 8 des Verlängerungsstückes 6 her eingeschoben und an ihrer Position verklebt oder ähnlich fixiert sein können. Diese Blenden erlauben zusammen mit den oben angesprochenen Volumselastizitäten des Innenraumes des Verlängerungsstückes 6 den Druck in diesem unabhängig von im Auspuffende 1 noch herrschenden Druckpulsationen einigermaßen konstant auf dem Niveau des Umgebungsdruckes zu halten, was eine ungestörte Messung im Bereich der Anbringung der Messsonde 2 ermöglicht.

Das Volumen des Verlängerungsstückes 6 liegt größenordnungsmäßig im Bereich der Kubatur des/der Zylinder der geprüften Brennkraftmaschine, wofür vorzugsweise Durchmesser des Mantelbereiches 8 im Bereich von 30-45 mm und eine Länge desselben von 300-800 mm Verwendung finden. Der Durchlassdurchmesser der endseitigen Blenden 9 liegt im Bereich von 12-18 mm.

Das Verlängerungsstück 6 weist einen abdichtend in das Auspuffende 1 steckbaren äußeren Anschlusskonus 10 auf, der zumindest an der dem Auspuffende 1 zugewandten äußeren Oberfläche aus elastischem, hitzebeständigem Material besteht, was eine einfache Anbringung am Auspuffende 1 zur Durchführung der Abgasmessung erlaubt. Mittels eines stativartigen Trägers 11 kann das Verlängerungsstück 6 dabei in der richtigen Höhe fixiert gehalten werden - zur Folge der elastischen Ausbildung des Mantelbereiches 8 können aber auch gewisse Höhen- und Lageabweichungen toleriert und Verbiegungen im Mantelbereich 8 zugelassen werden.

Bei der Ausführung nach Fig. 2 sind zwei separate, jeweils leicht abgebogen dargestellte Verlängerungsstücke 6 in zwei nebeneinander liegende Auspuffenden 1 einer wiederum nicht dargestellten Brennkraftmaschine (Motorrad oder dergleichen) eingeschoben und über jeweils einen Anschlusskonus 10 abgedichtet. Die Messsonden 2 sind wiederum von der Seite her (hier schräg) in die Verlängerungsstücke 6 eingeschoben und reichen hier (abweichend von Fig. 1) jeweils durch den Anschlusskonus 10 hindurch bis in das Innere des Auspuffendes 1. Beide Messsonden 2 sind an einer Abzweigung 12 zusammengeführt und ab dort über einen gemeinsamen Anschlussschlauch 3 mit dem Abgasmessgerät 4 verbunden. Im Bereich des dem Auspuffende 1 abgewandten Endes jedes Verlängerungsstückes 6 ist hier nur eine einzelne Blende 9 symbolisch dargestellt.

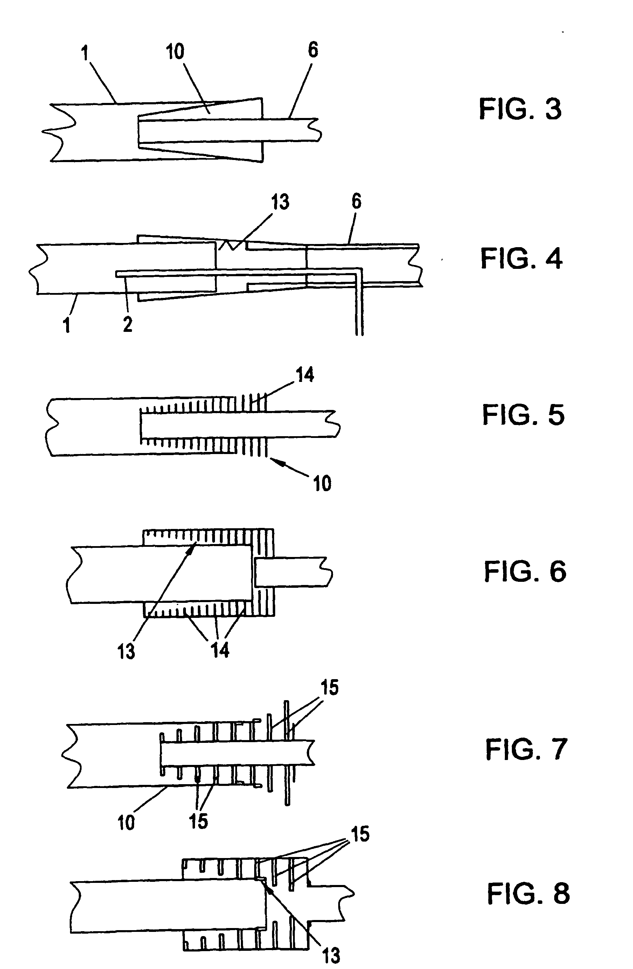

Fig. 3 zeigt ähnlich wie die Fig.1 und 2 einen äußeren Anschlusskonus 10 am auspuffseitigen Ende des Verlängerungsstückes 6, der abdichtend in das Auspuffende 1 eingesteckt wird. Das Auspuffende 1 kann damit Innendurchmesser im Bereich zwischen dem größten und kleinsten Außendurchmesser des Anschlusskonus 10 aufweisen.

In Fig. 4 ist ein Verlängerungsstück 6 dargestellt, mit einem abdichtend über das Auspuffende 1 steckbaren inneren Anschlusskonus 13 - der Außendurchmesser des Auspuffendes 1 kann in diesem Falle im Bereich zwischen dem kleinsten und größten nutzbaren Innendurchmesser des inneren Anschlusskonus 13 liegen. Zusätzlich ist in Fig. 4 auch die seitliche zugeführte und dann abgewinkelt in Richtung des Verlängerungsstückes 6 verlaufende Messsonde 2 eingezeichnet.

In den Fig. 5 und 6 ist der äußere bzw. innere Anschlusskonus 10 bzw. 13 jeweils mit zusätzlichen Dichtelementen in Form von ringförmigen Bürsten 14 ausgestaltet. Ähnlich sind die Ausführungen in den Fig. 7 und 8, wo der Anschlusskonus 10, 13 von ringförmig angeordneten Lamellen 15 dargestellt ist.

## Patentansprüche

1. Abgasmessanordnung für Brennkraftmaschinen, mit einer im Bereich des Auspuffendes
(1) der Brennkraftmaschine anbringbaren Messsonde (2), die in ein abgedichtet am Auspuffende (1) befestigbares, im wesentlichen rohrförmiges Verlängerungsstück (6) im Bereich von dessen dem Auspuff (1) zugewandten Ende von der Seite her eingesetzt ist, **dadurch gekennzeichnet, dass** das Verlängerungsstück (6) zumindest bereichsweise in Umfangs- und/oder Längsrichtung soweit elastisch ausgebildet ist, dass Druckpulsationen im ausströmenden Auspuffgas zumindest teilweise in Volumenänderungen kompensiert und damit bedämpft werden, und dass im Bereich des dem Auspuff (1) abgewandten Endes des Verlängerungsstückes (6) zumindest eine den freien Durchströmquerschnitt definiert verengende Blende (9) angeordnet ist, sodass im Inneren des Verlängerungsstückes (6) Druckbedingungen vorliegen, die im wesentlichen dem Umgebungsdruck entsprechen.

2. Abgasmessanordnung nach Anspruch 1, **dadurch gekennzeichnet, dass** das Volumen des Verlängerungsstückes (6) zumindest größenordnungsmäßig im Bereich der Kubatur des/der Zylinder der geprüften Brennkraftmaschine liegt.

3. Abgasmessanordnung nach Anspruch 1 oder 2, **dadurch gekennzeichnet, dass** zumindest der Mantelbereich (8) des Verlängerungsstückes (6) aus elastischem Material, vorzugsweise temperaturbeständigem Kunststoff, wie beispielsweise Silikon, besteht, welches vorzugsweise eine Shore-A-Härte im Bereich von 35 bis 85, bevorzugt zumindest annähernd 60, aufweist.

4. Abgasmessanordnung nach einem oder mehreren der Ansprüche 1 bis 3, **dadurch gekennzeichnet, dass** das Verlängerungsstück (6) einen Durchmesser im Bereich von 30-45 mm, vorzugsweise etwa 35 mm, und eine Länge im Bereich von 300-800 mm, vorzugsweise etwa 500 mm, bei einem Durchlassdurchmesser der endseitigen Blende(n) (9) im Bereich von 12-18 mm, vorzugsweise etwa 16 mm, aufweist.

5. Abgasmeßanordnung nach einem oder mehreren der Ansprüche 1 bis 4, **dadurch gekennzeichnet, daß** das Verlängerungsstück (6) an der Auspuffseite einen abdichtend in das Auspuffende (1) steckbaren äußeren Anschlusskonus (10) aufweist.

6. Abgasmeßanordnung nach einem oder mehreren der Ansprüche 1 bis 4, **dadurch gekennzeichnet, daß** das Verlängerungsstück (6) an der Auspuffseite einen abdichtend über das Auspuffende (1) steckbaren inneren Anschlußkonus (13) aufweist.

7. Abgasmeßanordnung nach Anspruch 5 oder 6, **dadurch gekennzeichnet, daß** der Anschlußkonus (10, 13) zumindest an der dem Auspuffende (1) zugewandten Oberfläche aus elastischem, hitzebeständigem Material besteht.

8. Abgasmeßanordnung nach Anspruch 5 oder 6, **dadurch gekennzeichnet, daß** der Anschlußkonus (10, 13) an der dem Auspuffende (1) zugewandten Oberfläche zusätzliche Dichtelemente, vorzugsweise ringförmige Bürsten (14) oder Lamellen (15), aufweist.

9. Abgasmeßanordnung nach einem oder mehreren der Ansprüche 1 bis 8, **dadurch gekennzeichnet, daß** die Messsonde (2) aus dem Verlängerungsstück (6) in das Auspuffende (1) vorragt.

10. Abgasmeßanordnung nach einem oder mehreren der Ansprüche 1 bis 8, **dadurch gekennzeichnet, daß** die Messsonde (2) im Inneren des Verlängerungsstückes (6) hinter dem Anschlußkonus (10, 13) endet.

## Claims

1. Exhaust-gas testing arrangement for internal combustion engines, with a test probe (2), which can be fitted in the region of the exhaust tailpipe (1) of the internal combustion engine and which is inserted from the side into an essentially tubular extension piece (6) in the region of its end facing towards the exhaust (1), the extension piece (6) being attached to the exhaust tailpipe (1) in a sealed manner,
**characterised in that**
the extension piece (6) is designed to be resilient in the circumferential and/or longitudinal direction at least in regions in such a manner that pressure pulses in the outflow of exhaust gas are at least partially compensated and therefore attenuated by changes in volume, and that at least one baffle (9) narrowing the free through-flow cross-section in a defined manner is arranged in the region of the end of the extension piece (6) facing away from the exhaust (1), so that pressure conditions are present in the interior of the extension piece (6), which correspond essentially to the ambient pressure.

2. Exhaust-gas testing arrangement according to claim 1,
**characterised in that**
the volume of the extension piece (6) is disposed at least in order of magnitude within the range of the cubature of the cylinder or cylinders of the internal combustion engine under test.

3. Exhaust-gas testing arrangement according to claim 1 or 2,
**characterised in that**
at least the casing region (8) of the extension piece (6) consists of resilient material, preferably temperature-resistant synthetic material, such as silicone, which preferably has a Shore A hardness within the range from 35 to 85, preferably at least approximately 60.

4. Exhaust-gas testing arrangement according to one or more of claims 1 to 3,
**characterised in that**
the extension piece (6) has a diameter within the range from 30-45 mm, preferably approximately 35 mm, and a length within the range from 300-800 mm, preferably approximately 500 mm, with a throughput diameter of the end-position baffle or baffles (9) within the range from 12-18 mm, preferably approximately 16 mm.

5. Exhaust-gas testing arrangement according to one or more of claims 1 to 4,
**characterised in that**,
at its exhaust end, the extension piece (6) has an external connecting cone (10), which can be plugged into the exhaust tailpipe (1) in a sealing manner.

6. Exhaust-gas testing arrangement according to one or more of claims 1 to 4,
**characterised in that**,
at its exhaust end, the extension piece (6) has an internal connecting cone (13), which can be fitted over the exhaust tailpipe (1) in a sealing manner.

7. Exhaust-gas testing arrangement according to claim 5 or 6,
**characterised in that**
the connecting cone (10, 13) consists of resilient, heat-resistant material at least at the surface facing towards the exhaust tailpipe (1).

8. Exhaust-gas testing arrangement according to claim 5 or 6,
**characterised in that**,
at the surface facing towards the exhaust tailpipe (1), the connecting cone (10, 13) provides additional sealing elements, preferably annular brushes (14) or lamellae (15).

9. Exhaust-gas testing arrangement according to one or more of claims 1 to 8,
**characterised in that**
the test probe (2) projects from the extension piece (6) into the exhaust tailpipe (1).

10. Exhaust-gas testing arrangement according to one or more of claims 1 to 8,
**characterised in that**
the test probe (2) terminates in the interior of the extension piece (6) behind the connecting cone (10, 13).

## Revendications

1. Dispositif de mesure des gaz d'échappement pour des moteurs à combustion interne, avec une sonde de mesure (2) susceptible d'être montée dans la zone de l'extrémité d'échappement (1) du moteur à combustion interne, et qui est insérée, depuis le côté, dans une pièce de prolongement (6) sensiblement tubulaire, dans une extrémité, susceptible d'être fixée de façon étanche à l'extrémité d'échappement (1), dans la zone de son extrémité tournée vers l'échappement (1), **caractérisé en ce que** la pièce de prolongement (6), au moins par zones, est suffisamment élastique en direction périphérique et/ou longitudinale, de sorte que des pulsations de pression, se produisant dans les gaz d'échappement s'évacuant, soient au moins compensées partiellement en des variations de volume et soient ainsi amorties, et **en ce que**, dans la zone de l'extrémité, opposée à l'échappement (1), de la pièce de prolongement (6), est disposé au moins un diaphragme (9) rétrécissant de façon définie la section transversale libre de passage d'écoulement, de manière qu'on ait, à l'intérieur de la pièce de prolongement (6), des conditions de pression correspondant sensiblement à la pression de l'environnement.

2. Dispositif de mesure des gaz d'échappement selon la revendication 1, **caractérisé en ce que** le volume de la pièce de prolongement (6) est, au moins en ordre de grandeur, dans la plage de volume ou de cylindrée du/des cylindres du moteur à combustion interne contrôlé.

3. Dispositif de mesure des gaz d'échappement selon la revendication 1 ou 2, **caractérisé en ce qu'**au moins la zone d'enveloppe (8) de la pièce de prolongement (6) est formée d'un matériau élastique, de préférence d'une matière synthétique résistante à la température, telle que par exemple du silicone, présentant de préférence une dureté Shore A dans la fourchette de 35 à 45, de préférence d'au moins à peu près 60.

4. Dispositif de mesure des gaz d'échappement selon l'une ou plusieurs des revendications 1 à 3, **caractérisé en ce que** la pièce de prolongement (6) présente un diamètre dans la fourchette de 30 à 45 mm, de préférence d'environ 35 mm, et une longueur dans la fourchette de 300 à 800 mm, de préférence d'environ 500 mm, pour un diamètre de passage du ou des diaphragmes (9) d'extrémité dans la fourchette de 12 à 18 mm, de préférence d'environ 16 mm.

5. Dispositif de mesure des gaz d'échappement selon l'une ou plusieurs des revendications 1 à 4, **caractérisé en ce que** la pièce de prolongement (6) présente, sur le côté d'échappement, un cône de raccordement (10) extérieur, pouvant être enfichable de façon étanche dans l'extrémité d'échappement (1).

6. Dispositif de mesure des gaz d'échappement selon l'une ou plusieurs des revendications 1 à 4, **caractérisé en ce que** la pièce de prolongement (6) présente, sur le côté d'échappement, un cône de raccordement (13) intérieur, enfichable de façon étanche sur l'extrémité d'échappement (1).

7. Dispositif de mesure des gaz d'échappement selon la revendication 5 ou 6, **caractérisé en ce que** le cône de raccordement (10, 13) est formé, au moins sur la surface tournée vers l'extrémité d'échappement (1), d'un matériau élastique résistant à la chaleur.

8. Dispositif de mesure des gaz d'échappement selon la revendication 5 ou 6, **caractérisé en ce que** le cône de raccordement (10, 13) présente, sur la surface tournée vers l'extrémité d'échappement (1), des éléments d'étanchéité supplémentaires, de préférence des brosses (14) ou des lamelles (15) annulaires.

9. Dispositif de mesure des gaz d'échappement selon l'une ou plusieurs des revendications 1 à 8, **caractérisé en ce que** la sonde de mesure (2) fait saillie de la pièce de prolongement (6) à l'intérieur de l'extrémité d'échappement (1).

10. Dispositif de mesure des gaz d'échappement selon l'une ou plusieurs des revendications 1 à 8, **caractérisé en ce que** la sonde de mesure (2) se termine à l'intérieur de la pièce de prolongement (6), derrière le cône de raccordement (10, 13).
